# EUROPÄISCHE PATENTSCHRIFT

(11) **EP 2 272 668 B1**
(45) Veröffentlichungstag und Bekanntmachung des Hinweises auf die Patenterteilung: **27.04.2016**
(21) Anmeldenummer: 09165059.8
(22) Anmeldetag: 09.07.2009
(51) Int. Cl.: B32B 21/04, B32B 27/04, B32B 27/20, B32B 27/30, B32B 27/42, B44C 5/04

(54) **Holzwerkstoffplatte mit gleichmäßiger Oberflächenschicht und ein Verfahren zu deren Herstellung**
Wood material board with even surface layer and method for its manufacture
Plaque en matière dérivée du bois dotée d'une couche de surface régulière et son procédé de fabrication

(43) Veröffentlichungstag der Anmeldung: 12.01.2011
(73) Patentinhaber: Flooring Technologies Ltd., Pieta PTA 9044 (MT)
(72) Erfinder:
(74) Vertreter: Maikowski & Ninnemann

(56) Entgegenhaltungen:
- WO-A-2005/042644
- DE-U1-202004 003 061

## Beschreibung

Die Erfindung betrifft eine Holzwerkstoffplatte nach dem Oberbegriff des Anspruchs 1, deren Verwendung nach Anspruch 14 und ein Verfahren zu deren Herstellung nach Anspruch 15.

Holzwerkstoffplatten, insbesondere solche die als Fußbodenplatten in Laminatböden verwendet werden, müssen über eine verschleißfeste, abriebfeste Oberfläche verfügen. Derartige Holzwerkstoffplatten umfassen in der Regel eine Trägerplatte und ein auf die Oberfläche der Trägerplatte aufgetragenes Dekor, welches auf einer Papierlage oder direkt auf der Trägerplatte gedruckt vorliegen kann. Die Herstellung einer verschleißfesten Oberfläche erfolgt üblicherweise durch den Auftrag eines imprägnierten Overlay-Papiers (US 3,928,706). Nachteilig wirkt sich hierbei aus, dass jede zusätzliche Papierschicht über dem Dekor zu einer Einbuße der Transparenz führt. Des Weiteren handelt es sich bei dem Overlay-Papieren um Papiere mit niedriger Grammätur, die sowohl bei.der Imprägnierung als auch bei der weiteren Verarbeitung leicht zerstört werden.

Eine andere Möglichkeit zur Herstellung einer verschleißfesten Oberfläche besteht darin, auf die Verwendung eines imprägnierten Overlay-Papiers zu verzichten, und statt dessen direkt auf das Dekorpapier ein Gemisch aus Melaminharz als Bindemittel, Korund als abriebfeste Partikel und gegebenenfalls Zellulosefasern aufzutragen. Die aufgetragene Schicht wird anschließend einer Zwischentrocknung unterworfen. In einem weiteren Schritt werden dann eine oder mehrere Schichten aus Melaminharz und Zellulosefasern aufgebracht und getrocknet.

Als nachteilig bei der Verwendung eines Gemisches von Bindemittel, abriebfesten Partikeln und Zellulosefasern zur Herstellung von verschleißfesten Oberflächen haben sich jedoch eine ungleichmäßige Verteilung des Partikel auf dem imprägnierten Dekorpapier und eine schlechte Abdeckung der Partikel durch die zellulosehaltigen Harzschichten erwiesen.

Es ist bekannt, die Oberfläche der abriebfesten Partikel mit Silanhaltigen Verbindungen zu modifizieren. So können die verwendeten abriebfesten Partikel oder Hartstoffe zur Verbesserung der Transparenz mit Silanen ummantelt sein (EP 519 242 B2).

Auch in der WO 2005/042644 A1 und in der DE 20 2004003061 U1 wird die Verwendung von mit einem Haftvermittler beschichteten Korundpartikeln beschrieben, wobei als Haftvermittler Verbindungen auf Silan-Basis verwendet werden. Besonders geeignete Haftvermittler stellen Amino-Silan-Haftvermittler dar.

Es ist ebenfalls bekannt, zur Obertlächenbehandlung der abriebfesten Partikel Aminoalkylalkoxysilane wie z.B. Aminopropyltrimethoxysilan, 3-Aminopropylmethyldimethoxysilan oder N-(2-Aminoethyl)-3-Aminopropyltrimethoxysilan einzusetzen. Die Silane können als 20% ige Lösung in Wasser mit den abriebfesten Partikeln gemischt werden und anschließend getrocknet werden (DE 10 2007 019 179 A1).

Die Zugabe der bekannten Silanverbindungen hat jedoch bei Verwendung eines Gemsiches aus Bindemittel, abriebfesten Partikeln und Zellulosefasern keinen Einfluss auf die Verteilung der Partikel. Die Ursache für die schlechte Verteilung ist wahrscheinlich in dem Dichteunterschied zwischen den abriebfesten Korundpartikeln und den Zellulosefasern zu sehen.

Dieser Dichteunterschied führt ebenfalls zu einer nur ungenügenden Mischbarkeit der Korundpartikeln und Zellulosefasern, zur Sedimentation der Korundpartikel und somit zu einem Bodensatz, dessen Bildung selbst bei kontinuierlichem Umpumpen des Gemisches im Herstellungsverfahren nicht sicher zu vermeiden ist.

Die Sedimentation führt nicht nur zu Verteilungsproblemen sondern auch zu Überdosierungen. Im Extremfall können daraus sogar Transparenzprobleme entstehen, die man eigentlich durch das Verfahren vermeiden wollte.

Die Ursache der ungenügenden Abdeckung der abriebfesten Partikel durch die Zellulosefasern und das Melaminharz ist möglicherweise in der elektrostatischen Abstoßung zwischen Partikel und Fasern zu suchen, da sowohl die Partikel, insbesondere die Korundpartikel als auch die Zellulosefasern über ausgeprägte negative Ladungen auf der Oberfläche verfügen, die für das Phänomen verantwortlich sein könnten.

Der vorliegenden Erfindung liegt daher die Aufgabe zu Grunde, eine Holzwerkstoffplatte mit einer verschleißfesten Oberfläche zur Verfügung zu stellen, die die oben genannten Nachteile nicht aufweist.

Diese Aufgabe wird erfindungsgemäß durch eine Holzwerkstoffplatte mit den Merkmalen des Anspruchs 1 gelöst.

Die erfindungsgemäße Holzwerkstoffplatte umfasst demnach eine Oberflächenschicht auf einem Substrat, wobei die Oberflächenschicht
a) natürliche oder synthetische Fasern,
b) mindestens ein Bindemittel,
c) abriebfeste Partikel, und
d) mindestens einen Oberflächenmodifikator für die abriebfesten Partikel umfasst, wobei der mindestens eine Oberflächenmodifikator ein Gemisch von mindestens einer Sauer bzw. alkalisch reagierenden, hydrolytisch wirksamen Verbindung gemäß Anspruch 1 und mindestens einer Verbindung der allgemeinen Formel (1)

**RₙSiX₍₄₋ₙ₎** **(I),**

umfasst, wobei
- R ein nicht-hydroliserbarer organischer Rest R ist ausgewählt aus der Gruppe umfassend-substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl,
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl,
- R und X gleich oder verschieden voneinander sein können, und
- n = 0,1, 2, 3, insbesondere 0 oder 1 ist.

In einer bevorzugten Ausführungsform wird ein Gemisch von Silanen der Formel (I) verwendet.

Unter dem Begriff "nicht-hydrolysierbarer organischer Rest" ist im Rahmen der vorliegenden Anmeldung ein organischer Rest zu verstehen, der in Gegenwart von Wasser nicht zur Bildung einer mit dem Si-Atom verknüpften OH-Gruppe oder NH₂-Gruppe führt.

Der nicht hydrolisierbare Rest R ist bevorzugt ausgewählt aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

Es ist insbesondere von Vorteil, wenn R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

Der Begriff "substituiert", in Verwendung mit "Alkyl", "Alkenyl", "Aryl", etc., bezeichnet die Substitution eines oder mehrerer Atome, in der Regel H-Atome, durch einen oder mehrere der folgenden Substituenten, bevorzugt durch, einen oder zwei der folgenden Substituenten: Halogen, Hydroxy, geschütztes Hydroxy, Oxo, geschütztes Oxo, C₃-C₇-Cycloalkyl, bicyclisches Alkyl, Phenyl, Naphtyl, Amino, geschütztes Amino, monosubstituiertes Amino, geschütztes monosubstituiertes Amino, disubstituiertes Amino, Guanidino, geschütztes Guanidino, ein heterozyklischer Ring, ein substituierter heterozyklischer Ring, Imidazolyl, Indolyl, Pyrrolidinyl, C₁-C₁₂-Alkoxy, C₁-C₁₂-Acyl, C₁-C₁₂-Acyloxy, Acryloyloxy, Nitro, Carboxy, geschütztes Carboxy, Carbamoyl, Cyano, Methylsulfonylamino, Thiol, C₁-C₁₀-Alkylthio und C₁-C₁₀-Alkylsulfonyl. Die substituierten Alkygruppen, Arylgruppen, Alkenylgruppen, können einmal oder mehrfach substituiert sein und bevorzugt 1- oder 2-mal, mit denselben oder unterschiedlichen Substituenten.

Der Begriff "Alkinyl", wie hier verwendet, bezeichnet einen Rest der Formel R-C=C-, insbesondere ein "C₂-C₆-Alkinyl". Beispiele für C₂-C₆-Alkinyle schließen ein: Ethinyl, Propinyl, 2-Butinyl, 2-Pentinyl, 3-Pentinyl, 2-Hexinyl, 3-Hexinyl, 4-Hexinyl, Vinyl sowie Di- und Tri-ine von geraden und verzweigten Alkylketten.

Der Begriff "Aryl", wie hierin verwendet, bezeichnet aromatische Kohlenwasserstoffe, beispielsweise Phenyl, Benzyl, Naphthyl, oder Anthryl. Substituierte Arylgruppen sind Arylgruppen, die, wie oben definiert, mit einem oder mehreren Substituenten, wie oben definiert, substituiert sind.

Der Begriff "Cycloalkyl" umfasst die Gruppen Cyclopropyl, Cyclobutyl, Cyclopentyl, Cyclohexyl und Cycloheptyl.

Der Rest X ist vorteilhafterweise ausgewählt aus einer Gruppe umfassend C₁-C₆-Alkoxy, Monoalkylamino oder Dialkylamino mit C₁-C₁₂-Alkyl, C₆-C₁₀-Aryloxy, C₁-C₆-Acyloxy und C₂-C₇-Alkylcarbonyl. Insbesondere kann X ausgewählt sein aus einer Gruppe umfassend Fluor, Chlor, Brom, Iod, Methoxy, Ethoxy, n-Propoxy, i-Propoxy, Butoxy, Monoalkylamino oder Dialkylamino mit C₁-C₆-Alkyl, Phenoxy, Acetoxy, Propionyloxy und Acetyl.

Besonders bevorzugt verwendete Silanverbindungen sind Tetraethoxysilan. Methyltriethoxysilan, Octyltriethoxysilan, (3-Acryloyloxypropyl)trimethoxysilan oder 2-(7-Oxabicyclo[4.1.0]hept-3-yl)ethyl-trimethoxysilan.

Als hydrolytisch wirksame Verbindungen werden sauer oder basisch bzw. alkalisch reagierende Verbindungen eingesetzt.

Die sauer reagierenden Verbindungen können Substanzen ausgewählt aus der Gruppe enthaltend gesättigte oder ungesättigte Mono- und Polycarbonsäuren, insbesondere Octadecansäure, Acrylsäure, Methacrylsäure oder Crotonsäure, ss-Dicarbonylverbindungen, insbesondere Acetylaceton, oder Aminosäuren, organische Derivate der Schwefelsäure wie Alkylsulfate oder Fettalkoholsulfate, Ester der Sulfonsäuren wie Alkylsulfonsäuren und Alkylsulfonate, organische Phosphate wie (alkyl)ethoxylierte Phosphorsäuren oder Lecithin, Polysäuren, insbesondere Polyhydroxyasparaginsäure und Polyhydroxystearinsäure sein. Weitere Beispiele sind 1H,1H-Pentadecafluoroctanol, Octanol, Stearinsäure, Ölsäure, Hexansäurechlorid, Hexansäuremethylester, Hexylchlorid und Nonafluorbutylchlorid, verwendet werden.

Die alkalisch reagierenden Verbindungen sind bevorzugt ausgewählt aus der Gruppe enthaltend Mono- und Polyämine, insbesondere Methylamin, oder Ethylendiamin, Ammoniak, Alkali - und Erdalkalihydroxide, insbesondere NaOH.

In einer Ausführungsform werden mehr als eine hydrolytisch wirksame Verbindung eingesetzt, wobei die Verwendung von zwei Säuren bevorzugt ist.

Der Oberflächenmodifikator führt zu einer Erhöhung der Wechselwirkung zwischen den Fasern und abriebfesten Partikeln, und ermöglicht so eine verbesserte Mischbarkeit der Fasern und Partikel. Dabei ist von entscheidender Bedeutung, daß die Sedimentationsneigung der abriebfesten Partikel durch die Zugabe des Oberflächenmodifikators durch die Veränderung der spezifischen Dichte der abriebfesten Partikel reduziert wird.

Die Änderung der Dichte wird durch einen verbesserten Kontakt der abriebfesten Partikel mit den verwendeten Fasern erreicht, wobei Kontakt und Haftung durch den Oberflächenmodifikator bewirkt werden. Diese Kontaktverbesserung kann mit einer stärkeren chemischen Wechselwirkungen bzw. Änderung der elektrostatischen Abstoßung zwischen den abriebfesten Partikeln und den Zellulosefasern erkärt werden, wobei der organische Rest R einen wesentlichen Einfluss ausübt.

Ein weiterer Vorteil des Oberflächenmodifikators besteht in einer verbesserten Abdeckung bzw. Umhüllung der abriebfesten Partikel.

Der Oberflächenmodifikator kann 50 bis 80 Gew%, bevorzugt 60 bis 70 Gew% einer Silanverbindung der allgemeinen Formel (I) und 1 bis 10 Gew%, bevorzugt 3 bis 8 Gew % einer hydrolytisch wirksamen Verbindung aufweisen, wobei der Rest Wasser ist.

In einer besonders bevorzugten Ausführungsform weist der Oberflächenmodifikator 67 Gew% mindestens einer Silan-Verbindung der Formel (I), 5,5 Gew% mindestens einer hydrolytisch wirksamen Verbindung und 27,5 Gew% Wasser auf.

Das quantitative Verhältnis des Oberflächenmodifikators zu den abriebfesten Partikeln beträgt zwischen 0,1 und 15 Gew%, bevorzugt zwischen 1 und 7 Gew. %, insbesondere bevorzugt zwischen 2 und 5 Gew%.

In einer bevorzugten Ausführungsform werden dem Oberflächenmodifikator weitere Stoffe zugegeben. So können dem Gemisch des Oberflächenmodifikators Polyole zugesetzt werden, wobei lineare Polyole wie Sorbit oder zyklische Polyole wie Inosit bevorzugt sind.

Zur Herstellung des Oberflächenmodifikators wird die Silanverbindung oder ein Gemisch von mindestens zwei Silanverbindungen mit der hydrolytisch wirksamen Verbindung wie Säure oder Lauge hydrolisiert, wobei es zu einer Aktivierung der Silanverbindungen kommt. Die aktivierten Silane bewirken eine verbesserte Umhüllung der abriebfesten Partikel und erhöhen so die Wechselwirkung zwischen den Partikeln und Fasern.

Die verwendeten natürlichen oder synthetischen Fasern sind bevorzugt ausgewählt aus der Gruppe enthaltend Holzfasern, Zellulosefasern, Wollfasern, Hanffasern und organische oder anorganische Polymerfasern, insbesondere modifizierte Zellulosefasern.

Als Bindemittel kommt vorteilhafterweise ein Bindemittel ausgewählt aus der Gruppe enthaltend Melaminharze, Acrylatharze und Polyurethanharze zum Einsatz.

Die abriebfesten Partikel sind bevorzugt ausgewählt aus der Gruppe enthaltend Aluminiumoxide, Korund, Borcarbide, Siliziumdioxide, Siliziumcarbide und Glaskugeln. Die Gesamtmenge der eingelagerten Partikel beträgt 10 bis 40 Vol%, insbesondere 20 bis 30 Vol% bezogen auf das Gesamtvolumen der aufgetragenen Oberflächenschicht und 20 bis 50 Masse%, insbesondere 30 bis 40 Masse% bezogen auf die Gesamtmasse der aufgetragenen Oberflächenschicht.

Prinzipiell kann als Substrat eine Trägerplatte aus einem Holzwerkstoff oder aus Kunststoff oder einem Holzwerkstoff-Kunststoff-Gemisch verwendet werden, insbesondere eine Span-, mitteldichte Faser(MDF)-, hochdichte Faser (HDF)- oder Grobspan (OSB)- oder Sperrholzplatten, eine Zementfaserplatte und/oder Gipsfaserplatte.

Zusätzlich zu der erfindungsgemäßen Oberflächenschicht kann das Substrat in einer Ausführungsform mindestens eine Dekorlage, eine Trägerplatte und/oder mindestens eine schalldämmende Schicht umfassen.

So ist die Dekorlage bevorzugt zwischen Substrat und Oberflächenschicht angeordnet. Die Dekore für die oberen Flächen der Trägerplatten können dabei auf einer Papierlage oder direkt auf die plattenförmige Basis gedruckt vorliegen. Solche Dekore sind beispielsweise Holz- oder Steinimitationen. Auch Fantasiedekore sind möglich. Diese können sich beispielsweise aus Abwandlungen von natürlichen Werkstoffen ergeben.

Die schalldämmende Schicht ist bevorzugt auf Substratunterseite, die der Oberflächensicht gegenüberliegt, angeordnet. Als schalldämmende Schichten kommen vernetzte PE-Matten mit Dicken von 1,0 mm oder 0,3 bis 3 mm dicke gefüllte Schwerfolien, aber auch geschäumte PE- oder PU-Folien zum Einsatz.

Auch ist es vorstellbar, wenn in der Oberflächensicht weitere Pigmente, wie Farbpigment oder ähnliches enthalten sind.

Die Holzwerkstoffplatte gemäß der vorliegenden Erfindung ist aufgrund der hervorragenden Abriebfestigkeit als Fußbodenplatte, Wandplatte, Deckenplatte, Möbelplatte, Platte für Nasszellenbereiche oder als Schneidbrett einsetzbar.

Die vorliegende Erfindung wird auch durch ein Verfahren mit den Merkmalen des Anspruchs 15 gelöst.

Demnach erfolgt die Herstellung einer Holzwerkstoffplatte gemäß der vorliegenden Erfindung in einem Verfahren umfassend die folgende Schritte:
a) Herstellen eines Gemisches enthaltend natürliche oder synthetische Fasern, insbesondere Zellulosefasern, mindestens ein Bindemittel; abriebfeste Partikel, und mindestens ein Oberflächenmodifikator für die abriebfesten Partikel mit den obigen Merkmalen,
b) Auftragen des Gemisches von a) auf das Substrat, und
c) Aushärten des Gemisches bei einem Druck zwischen 3 und 8 MPa und einer Temperatur zwischen 150 und 250°C unter Ausbildung der Oberflächenschicht auf dem Substrat.

Zur Herstellung des Gemisches werden die einzelnen Komponenten in der Reihenfolge Bindemittel, abriebfeste Partikel, Fasern und Oberflächenmodifikator unter starkem Rühren zugegeben und vermischt.

Die Erfindung wird nachfolgend unter Bezugnahme auf die Figuren der Zeichnungen an mehreren Ausführungsbeispielen näher erläutert. Es zeigen:

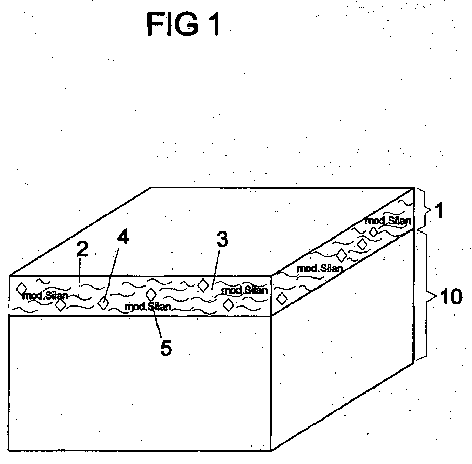

- Figur 1: perspektivische Ansicht eines Querschnitts einer Holzwerkstoffplatte gemäß einer ersten Ausführungsform

Figur 1 zeigt den Querschnitt durch eine Holzwerkstoffplatte bestehend aus einem Substrat 10 mit einer Oberflächenschicht 1. Das Substrat 10 kann dabei aus einer Trägerplatte bestehen. Des Weiteren ist es auch möglich, dass das Substrat eine Trägerplatte umfasst, auf deren Oberseite eine Dekorlage und auf deren Unterseite eine schalldämmende Schicht aufgetragen ist.

Die Oberflächenschicht enthält mindestens 4 Komponenten: Zellulosefasern 2, ein Melaminharz als Bindemittel 3, Korund als abriebfeste Partikel 4 sowie als Oberflächenmodifikator 5 ein Gemisch aus mindesten einer hydrolytisch wirksamen Verbindung und mindestens einer Silan-Verbindung.

Bei der Herstellung einer Harzflotte für die Imprägnierung von Dekorpapiere bewirkt eine deutliche Reduzierung der Sedimentation, was anhand des folgenden Ausführungsbeispiels gezeigt wird.

### Ausführungsbeispiel

### Herstellung des Oberflächenmodifikators

Zu 20,8 g eines Silans der Sorte Tetraethoxysilan und 1,78 g Methyltriethoxysilan und 7,75 g Wasser wird unter Rühren 1,5 g Phosphorsäure (0,1 molar) und 1,8 g Octadecansäure hinzu gegeben. Diese Lösung wird anschließend 30 Minuten bei Raumtemperatur gerührt.

Der hergestellte Oberflächenmodifikator weist somit zwei Silan-Verbindungen und zwei Säuren als hydrolytisch wirksame Verbindungen auf.

### Effekt des Oberflächenmodifikators

Zur Überprüfung der Wirkung des Oberflächenmodifikators wurden zwei Ansätze hergestellt, die einmal mit und einmal ohne den entsprechenden Oberflächenmodifikator hergestellt wurden.

Versuchsrezeptur mit Oberflächenmodifikator:
- 4,0kg Melaminharz fl.
- 1,5kg Korund F 240
- 0,2kg Zellulose
- 0,126kg Oberflächenmodifikator

Versuchsrezeptur ohne Oberflächenmodifikator:
- 4,0kg Melaminharz fl.
- 1,5kg Korund F 240
- 0,2kg Zellulose

Die beiden Ansätze wurden während der Herstellung und ca. 5 min danach gut gerührt.

Ein Teil der beiden Rezepturen wurde anschließend in einen Standzylinder überführt. Nach 45 min wurde der Überstand, der sich gebildet hatte abgegossen und die Höhe des Bodensatzes bestimmt. Dabei zeigte sich, dass der Bodensatz der Standardrezeptur ca. 10 mm betrug während der Bodensatz der Versuchsrezeptur nur ca. 3 mm Höhe aufwies. Der Rest der Ansätze, der sich noch in den Ansatzbehältern befand, wurde vier Stunden stehen gelassen.

Dann wurde versucht beide Ansätze mit einem Rührwerk aufzurühren. Bei der Versuchsrezeptur gelang dies nahezu rückstandsfrei, bei der Standardrezeptur verblieb ein ca. zwei Zentimeter-dicker Bodensatz.

## Patentansprüche

1. Holzwerkstoffplatte mit einer Oberflächenschicht (1) umfassend natürliche oder synthetische Fasern (2), mindestens ein Bindemittel (3) und abriebfeste Partikel (4) auf einem Substrat (10), die Oberflächenschicht (1) zusätzlich mindestens einen Oberflächenmodifikator (5) für die abriebfesten Partikel (4) umfasst, wobei der mindestens eine Oberflächenmodifikator (5) ein Gemisch von mindestens einer hydrolytisch wirksamen Verbindung umfasst,
**dadurch gekennzeichnet, dass**
die mindestens eine hydrolytisch wirksame Verbindung eine sauer reagierende Verbindungausgewählt aus der Gruppe enthaltend gesättigte oder ungesättigte Mono- und Polycarbonsäuren, Acrylsäure, Methacrylsäure oder Crotonsäure, ss-Dicarbonylverbindungen, organische Derivate der Schwefelsäure, Ester der Sulfonsäuren, organische Phosphate, Polysäuren, 1H,1H-Pentadecafluoroctanol, Octanol, Stearinsäure, Ölsäure, Hexansäurechlorid, Hexansäuremethylester, Hexylchlorid und Nonafluorbutylchlorid,
oder eine alkalisch reagierende Verbindung ausgewählt aus der Gruppe enthaltend Mono- und Polyamine, Aminosäuren, Ammoniak, Alkali- und Erdalkalihydroxide
ist, und
mindestens einer Verbindung der allgemeinen Formel (I)
**RₙSiX₍₄₋ₙ₎** **(I),**
wobei
- R ein nicht-hydroliserbarer organischer Rest R ist ausgewählt aus der Gruppe umfassend substituiertes und nicht-substituiertes Alkyl, substituiertes und nicht-substituiertes Aryl, substituiertes und nicht-substituiertes Alkenyl, substituiertes und nicht-substituiertes Alkinyl, substituiertes und nicht-substituiertes Cycloalkyl,
- X H, OH oder ein hydrolysierbarer Rest ist ausgewählt aus der Gruppe umfassend Halogen, Alkoxy, Carboxy, Amino, Monoalkylamino oder Dialkylamino, Aryloxy, Acyloxy, Alkylcarbonyl, und
- n = 0,1, 2, 3, insbesondere 0 oder 1 ist,
umfasst.

2. Holzwerkstoffplatte nach Anspruch 1, **dadurch gekennzeichnet, dass** R ausgewählt ist aus einer Gruppe umfassend substituiertes und nicht-substituiertes C₁-C₃₀-Alkyl, insbesondere C₅-C₂₅-Alkyl, substituiertes und nicht-substituiertes C₂-C₆-Alkenyl, substituiertes und nicht-substituiertes C₂-C₆-Alkinyl und substituiertes und nicht-substituiertes C₆-C₁₀-Aryl.

3. Holzwerkstoffplatte nach Anspruch 1 oder 2, **dadurch gekennzeichnet, dass** R ausgewählt ist aus der Gruppe enthaltend Methyl, Ethyl, n-Propyl, Isopropyl, n-Butyl, s-Butyl, t-Butyl, Pentyl, Hexyl, Cyclohexyl, Vinyl, 1-Propenyl, 2-Propenyl, Butenyl, Acetylenyl, Propargyl, Phenyl und Naphthyl.

4. Holzwerkstoffplatte nach einem der vorhergehenden Ansprüche, **dadurch gekennzeichnet, dass** X ausgewählt ist aus einer Gruppe umfassend C₁-C₆-Alkoxy, Monoalkylamino oder Dialkylamino mit C₁-C₁₂-Alkyl, C₆-C₁₀-Aryloxy, C₁-C₆-Acyloxy und C₂-C₇-Alkylcarbonyl.

5. Holzwerkstoffplatte nach einem der vorhergehenden Ansprüche, **dadurch gekennzeichnet, dass** X ausgewählt ist aus einer Gruppe umfassend Fluor, Chlor, Brom, Iod, Methoxy, Ethoxy, n-Propoxy, i-Propoxy, Butoxy, Monoalkylamino oder Dialkylamino mit C₁-C₆-Alkyl, Phenoxy, Acetoxy, Propionyloxy und Acetyl.

6. Holzwerkstoffplatte nach einem der vorhergehenden Ansprüche, **dadurch gekennzeichnet, dass** die sauer reagierende Verbindung ausgewählt ist aus der Gruppe Octadecansäure, Acetylaceton, Alkylsulfate oder Fettalkoholsulfate, Alkylsulfonsäuren und Alkylsulfonate, (alkyl)ethoxylierte Phosphorsäuren oder Lecithin, Polyhydroxyasparaginsäure und Polyhydroxystearinsäure.

7. Holzwerkstoffplatte nach einem der Ansprüche 1 bis 5, **dadurch gekennzeichnet, dass** die alkalisch reagierende Verbindung ausgewählt ist aus der Gruppe enthaltend Methylamin und Ethylendiamin, NaOH.

8. Holzwerkstoffplatte nach einem der vorhergehenden Ansprüche, **dadurch gekennzeichnet, dass** die natürlichen oder synthetischen Fasern ausgewählt sind aus der Gruppe enthaltend Holzfasern, Zellulosefasern, Wollfasern, Hanffasern und organische oder anorganische Polymerfasern, insbesondere modifizierte Zellulosefasern.

9. Holzwerkstoffplatte nach einem der vorhergehenden Ansprüche, **dadurch gekennzeichnet, dass** das Bindemittel ausgewählt ist aus der Gruppe enthaltend Melaminharze, Acrylatharze und Polyurethanharze.

10. Holzwerkstoffplatte nach einem der vorhergehenden Ansprüche, **dadurch gekennzeichnet, dass** die abriebfesten Partikel ausgewählt sind aus der Gruppe enthaltend Aluminiumoxide, Korund, Borcarbide, Siliziumdioxide, Siliziumcarbide und Glaskugeln.

11. Holzwerkstoffplatte nach einem der vorhergehenden Ansprüche, **dadurch gekennzeichnet, dass** das Substrat (10) eine Trägerplatte aus einem Holzwerkstoff oder aus Kunststoff oder einem Holzwerkstoff-Kunststoff-Gemisch ist, insbesondere eine Span-, mitteldichte Faser(MDF)-, hochdichte Faser (HDF)- oder Grobspan (OSB)- oder Sperrholzplatten, eine Zementfaserplatte und/oder Gipsfaserplatte ist.

12. Holzwerkstoffplatte nach einem der vorhergehenden Ansprüche, **dadurch gekennzeichnet, dass** das Substrat (10) mindestens eine Dekorlage, eine Trägerplatte und/oder mindestens eine schalldämmende Schicht umfasst.

13. Verwendung einer Holzwerkstoffplatte nach einem der vorhergehenden Ansprüche als Fußbodenplatte, Wandplatte, Deckenplatte, Möbelplatte oder als Schneidbrett.

14. Verfahren zur Herstellung einer Holzwerkstoffplatte nach einem der Ansprüche 1 bis 12 umfassend die Schritte:
a) Herstellen eines Gemisches enthaltend natürliche oder synthetische Fasern (2), mindestens ein Bindemittel (3), abriebfeste Partikel (4), und mindestens einen Oberflächenmodifikator (5) gemäß Anspruch 1,
b) Auftragen des Gemisches von a) auf das Substrat (10), und
c) Aushärten des Gemisches bei einem Druck zwischen 3 und 8 MPa und einer Temperatur zwischen 150 und 250°C unter Ausbildung der Oberflächenschicht auf dem Substrat.

## Claims

1. Wood material board with a surface layer (1) comprising natural or synthetic fibres (2), at least one binder (3) and abrasion-resistant particles (4) on a substrate (10), wherein the surface layer (1) comprises additionally at least one surface modifier (5) for the abrasion-resistant particles (4) in which the at least one surface modifier (5) comprises a mixture of at least one hydrolytically active compound,
**characterized in that**
the at least one hydrolytically active compound is an acidic reacting compound selected from the group comprising saturated or unsaturated mono- and polycarboxylic acids, acrylic acid, methacrylic acid or crotonic acid, ss-dicarbonyl compounds, organic derivatives of sulphuric acid, esters of sulphonic acids, organic phosphates, polyacids, 1H,1H-pentadecafluorooctanol, octanol, stearic acid, oleic acid, hexanoyl chloride, methyl hexanoate, hexyl chloride and nonafluorobutyl chloride,
or an alkaline reacting compound selected from the group comprising mono- and polyamines, amino acids, ammonia, alkali metal hydroxides and alkaline earth metal hydroxides
and
comprises at least one compound of general formula (I)
**RₙSiX₍₄₋ₙ₎** **(I)**
wherein
- R is a non-hydrolysable organic residue R selected from the group comprising substituted and unsubstituted alkyl, substituted and unsubstituted aryl, substituted and unsubstituted alkenyl, substituted and unsubstituted alkynyl, substituted and unsubstituted cycloalkyl,
- X is H, OH or a hydrolysable residue selected from the group comprising halogen, alkoxy, carboxy, amino, monoalkylamino or dialkylamino, aryloxy, acyloxy, alkylcarbonyl, and
- n = 0, 1, 2, 3, in particular is 0 or 1.

2. Wood material board according to Claim 1, **characterized in that** R is selected from a group comprising substituted and unsubstituted C₁-C₃₀-alkyl, in particular C₅-C₂₅-alkyl, substituted and unsubstituted C₂-C₆-alkenyl, substituted and unsubstituted C₂-C₆-alkynyl and substituted and unsubstituted C₆-C₁₀-aryl.

3. Wood material board according to Claim 1 or 2, **characterized in that** R is selected from the group comprising methyl, ethyl, n-propyl, isopropyl, n-butyl, s-butyl, t-butyl, pentyl, hexyl, cyclohexyl, vinyl, 1-propenyl, 2-propenyl, butenyl, acetylenyl, propargyl, phenyl and naphthyl.

4. Wood material board according to any of the preceding claims, **characterized in that** X is selected from a group comprising C₁-C₆-alkoxy, monoalkylamino or dialkylamino with C₁-C₁₂-alkyl, C₆-C₁₀-aryloxy, C₁-C₆-acyloxy and C₂-C₇-alkylcarbonyl.

5. Wood material board according to any of the preceding claims, **characterized in that** X is selected from a group comprising fluorine, chlorine, bromine, iodine, methoxy, ethoxy, n-propoxy, i-propoxy, butoxy, monoalkylamino or dialkylamino with C₁-C₆-alkyl, phenoxy, acetoxy, propionyloxy and acetyl.

6. Wood material board according to any of the preceding claims, **characterized in that** the acidic reacting compound is selected from the group of octadecanoic acid, acetylacetone, alkyl sulphates or fatty alcohol sulphates, alkylsulphonic acids and alkyl sulphonates, (alkyl)ethoxylated phosphoric acids or lecithin, polyhydroxyaspartic acid and polyhydroxystearic acid.

7. Wood material board according to any of Claims 1 to 5, **characterized in that** the alkaline reacting compound is selected from the group comprising methylamine and ethylenediamine, NaOH.

8. Wood material board according to any of the preceding claims, **characterized in that** the natural or synthetic fibres are selected from the group comprising wood fibres, cellulose fibres, wool fibres, hemp fibres and organic or inorganic polymer fibres, particularly modified cellulose fibres.

9. Wood material board according to any of the preceding claims, **characterized in that** the binder is selected from the group comprising melamine resins, acrylate resins and polyurethane resins.

10. Wood material board according to any of the preceding claims, **characterized in that** the abrasion-resistant particles are selected from the group comprising aluminium oxide, corundum, boron carbides, silicon dioxides, silicon carbides and glass balls.

11. Wood material board according to any of the preceding claims, **characterized in that** the substrate (10) is a carrier board composed of a wood material or plastic or a wood material-plastic mixture, in particular a chipboard, medium density fibreboard (MDF), high density fibreboard (HDF) or oriented strand board (OSB) or plywood board, a cement fibreboard and/or gypsum fibreboard.

12. Wood material board according to any of the preceding claims, **characterized in that** the substrate (10) comprises at least one decorative layer, a carrier board and/or at least one sound insulating layer.

13. Use of a wood material board according to any of the preceding claims as a floorboard, wallboard, ceiling board, furniture board or as a cutting board.

14. Process for producing a wood material board according to any of Claims 1 to 12 comprising the steps of:
a) producing a mixture comprising natural or synthetic fibres (2), at least one binder (3), abrasion-resistant particles (4) and at least one surface modifier (5) according to Claim 1,
b) applying the mixture from a) to the substrate (10), and
c) curing the mixture at a pressure between 3 and 8 MPa and a temperature between 150 and 250°C to form the surface layer on the substrate.

## Revendications

1. Panneau en matériau à base de bois, ayant une couche superficielle (1) comprenant des fibres naturelles ou synthétiques (2), au moins un liant (3) et des particules (4), résistantes à l'abrasion, sur un substrat (10), la couche superficielle (1) comprenant en outre au moins un modifiant de surface (5) pour les particules (4) résistantes à l'abrasion, le ou les modifiants de surface (5) comprenant un mélange d'au moins un composé à effet hydrolytique,
**caractérisé en ce que** le ou les composés à effet hydrolytique représentent des composés à réaction acide, choisis dans le groupe contenant les acides mono- et polycarboxyliques saturés ou insaturés, l'acide acrylique, l'acide méthacrylique ou l'acide crotonique, les composés ss-dicarbonyle, les dérivés organiques de l'acide sulfurique, les esters des acides sulfoniques, les phosphates organiques, les polyacides, le 1H,1H-pentadécafluorooctanol, l'octanol, l'acide stéarique, l'acide oléique, le chlorure d'hexanoyle, l'hexanoate de méthyle, le chlorure d'hexyle et le chlorure de nonafluorobutyle,
ou un composé à réaction alcaline, choisi dans le groupe contenant les mono- et des polyamines, les acides aminés, l'ammoniac, les hydroxydes de métaux alcalins et alcalino-terreux, et
au moins un composé de formule générale (I)
**RₙSiX₍₄₋ₙ₎** **(I)**
dans laquelle
- R est un radical organique R non hydrolysable, choisi dans le groupe comprenant les groupes alkyle substitués et non substitués, aryle substitués et non substitués, alcényle substitués et non substitués, alcynyle substitués et non substitués, cycloalkyle substitués et non substitués,
- X est H, OH ou un radical hydrolysable, choisi dans le groupe comprenant les groupes halogéno, alcoxy, carboxy, amino, monoalkylamino ou dialkylamino, aryloxy, acyloxy, alkylcarbonyle, et
- n = 0, 1, 2, 3, en particulier 0 ou 1.

2. Panneau en matériau à base de bois selon la revendication 1, **caractérisé en ce que** R est choisi dans un groupe comprenant les groupes alkyle en C₁-C₃₀, en particulier alkyle en C₅-C₂₅, substitués et non substitués, alcényle en C₂-C₆ substitués et non substitués, alcynyle en C₂-C₆ substitués et non substitués, et aryle en C₆-C₁₀ substitués et non substitués.

3. Panneau en matériau à base de bois selon la revendication 1 ou 2, **caractérisé en ce que** R est choisi dans le groupe contenant les groupes méthyle, éthyle, n-propyle, isopropyle, n-butyle, s-butyle, t-butyle, pentyle, hexyle, cyclohexyle, vinyle, 1-propényle, 2-propényle, butényle, acétylényle, propargyle, phényle et naphtyle.

4. Panneau en matériau à base de bois selon l'une des revendications précédentes, **caractérisé en ce que** X est choisi dans le groupe comprenant les groupes alcoxy en C₁-C₆, monoalkylamino ou dialkylamino dont le fragment alkyle est en C₁-C₁₂, aryloxy en C₆-C₁₀, acyloxy en C₁-C₆ et alkylcarbonyle en C₂-C₇.

5. Panneau en matériau à base de bois selon l'une des revendications précédentes, **caractérisé en ce que** X est choisi dans un groupe comprenant les groupes fluoro, chloro, bromo, iodo, méthoxy, éthoxy, n-propoxy, i-propoxy, butoxy, monoalkylamino ou dialkylamino dont le fragment alkyle est en C₁-C₆, phénoxy, acétoxy, propionyloxy et acétyle.

6. Panneau en matériau à base de bois selon l'une des revendications précédentes, **caractérisé en ce que** le composé à réaction acide est choisi dans le groupe consistant en l'acide octadécanoïque, l'acétylacétone, les alkylsulfates ou les (alcool gras)-sulfates, les acides alkylsulfoniques et les alkylsulfonates, les acides phosphoriques (alkyl)éthoxylés ou la lécithine, l'acide polyhydroxyasparagique et l'acide polyhydroxystéarique.

7. Panneau en matériau à base de bois selon l'une des revendications 1 à 5, **caractérisé en ce que** le composé à réaction alcaline est choisi dans le groupe contenant la méthylamine et l'éthylènediamine, NaOH.

8. Panneau en matériau à base de bois selon l'une des revendications précédentes, **caractérisé en ce que** les fibres naturelles ou synthétiques sont choisies dans le groupe contenant les fibres de bois, les fibres de cellulose, les fibres de laine, les fibres de chanvre et les fibres polymères organiques ou inorganiques, en particulier les fibres de cellulose modifiée.

9. Panneau en matériau à base de bois selon l'une des revendications précédentes, **caractérisé en ce que** le liant est choisi dans le groupe contenant les résines de mélamine, les résines d'acrylate et les résines de polyuréthanne.

10. Panneau en matériau à base de bois selon l'une des revendications précédentes, **caractérisé en ce que** les particules résistantes à l'abrasion sont choisies dans le groupe contenant les oxydes d'aluminium, le corindon, le carbure de bore, les dioxydes de silicium, les carbures de silicium et les billes de verre.

11. Panneau en matériau à base de bois selon l'une des revendications précédentes, **caractérisé en ce que** le substrat (10) est une plaque support en un matériau à base de bois ou un matériau plastique ou en un mélange matériau à base de bois-matériau plastique, en particulier un panneau de particules, un panneau de fibres moyenne densité (MDF), un panneau de fibres haute densité (HDF) ou un panneau de grandes particules orientées (OSB) ou un panneau de contreplaqué, un panneau de fibres de ciment et/ou un panneau de fibres de plâtre.

12. Panneau en matériau à base de bois selon l'une des revendications précédentes, **caractérisé en ce que** le substrat (10) comprend au moins une couche décorative, une plaque support et/ou au moins une couche d'insonorisation.

13. Utilisation d'un panneau en matériau à base de bois selon l'une des revendications précédentes en tant que carreau de sol, carreau mural, carreau de plafond, panneau de meuble, ou en tant que planche à découper.

14. Procédé de fabrication d'un panneau en matériau à base de bois selon l'une des revendications 1 à 12, comprenant les étapes :
a) fabrication d'un mélange contenant des fibres naturelles ou synthétiques (2), au moins un liant (3), des particules (4) résistantes à l'abrasion, et au moins un modifiant de surface (5) selon la revendication 1,
b) application du mélange de a) sur le substrat (10), et
c) durcissement du mélange sous une pression comprise entre 3 et 8 MPa et à une température comprise entre 150 et 250°C, avec formation de la couche superficielle sur le substrat.
